# FASCICULE DE BREVET EUROPEEN

(11) **EP 2 349 871 B1**
(45) Date de publication et mention de la délivrance du brevet: **09.04.2014**
(21) Numéro de dépôt: 09736824.5
(22) Date de dépôt: 01.10.2009
(51) Int. Cl.: B65D 85/68, B60S 1/38

(54) **DISPOSITIF ET ENSEMBLE DE MAINTIEN D'UNE PAIRE DE BALAIS D'ESSUIE-GLACES, EMBALLAGE ET PROCEDE DE MONTAGE CORRESPONDANTS**
VORRICHTUNG UND ANORDNUNG ZUM ABSTÜTZEN EINES PAARS SCHEIBENWISCHER UND ENTSPRECHENDE(S) VERPACKUNG UND VERFAHREN ZUR BEFESTIGUNG DERSELBEN
DEVICE AND ASSEMBLY FOR SUPPORTING A PAIR OF WINDSCREEN WIPERS, AND CORRESPONDING PACKAGING AND METHOD FOR MOUNTING SAME

(30) Priorité: 02.10.2008 FR 0805441
(43) Date de publication de la demande: 03.08.2011
(73) Titulaire: VALEO SYSTEMES D'ESSUYAGE, 78321 La Verrière (FR)
(72) Inventeur: JACQUET, Pascal, F-78321 La Verriere (FR); JEHANNET, Jean-Pierre, F-27200 Vernon (FR)
(74) Mandataire: Léveillé, Christophe
(86) Numéro de dépôt international: PCT/EP2009/007034
(87) Numéro de publication internationale: WO 2010/037541

(56) Documents cités:
- CH-A- 183 088
- DE-A1- 19 951 971
- DE-U1-202007 005 987
- DE-U1-202007 005 987
- FR-A- 2 875 486

## Description

La présente invention concerne un dispositif de maintien d'une paire de balais d'essuie-glaces comportant chacun un élément de structure et une lame d'essuyage dont une extrémité libre est destinée à être en contact avec une surface vitrée à essuyer. L'invention concerne également un ensemble de maintien comportant une pluralité de dispositifs de maintien, ainsi qu'un emballage et un procédé de montage correspondants.

Le dispositif ou l'ensemble de maintien est par exemple destiné à être utilisé en vue de la commercialisation, dans des rayonnages de magasins, d'un kit de remplacement d'une paire de balais d'essuie-glaces d'un véhicule, ou en vue du transport d'une paire de balais d'essuie-glaces depuis le lieu de sa production vers le lieu de son conditionnement ou vers le lieu de son assemblage sur un véhicule automobile.

Pour la vente en rayonnage, les paires de balais d'essuie-glaces classiques sont généralement conditionnées sous blister ou dans un emballage cartonné, par exemple une boîte, de forme générale longiligne et linéaire. En effet, la forme de ces balais permet un conditionnement simple, linéaire et dont l'encombrement n'est pas nécessairement plus important que les dimensions de la paire de balais d'essuie-glaces elle-même.

Pour des balais d'essuie-glaces de type plat désignés par l'anglicisme « flat-blade », le conditionnement et le maintien s'avèrent plus problématiques que dans le cas de balais d'essuie-glaces classiques du fait de leur forme générale longiligne et courbe. Concernant ces balais d'essuie-glaces, on se référera, par exemple, à la demande de brevet internationale publiée sous le numéro WO 2005/108176 qui présente en détail leur structure. Celle-ci ne sera donc pas reprise ici.

Une première solution pour permettre un conditionnement d'une paire de balais d'essuie-glaces, notamment de type flat-blade, est proposée dans le brevet américain publié sous le numéro US 6,779,661. Ce document décrit, notamment en référence à ses figures 12 à 15, un support de conditionnement de forme longitudinale dans lequel viennent s'insérer longitudinalement, par une extrémité du support, deux balais d'essuie-glaces. Le support présente soit des encoches soit des ergots dans lesquels des formes complémentaires prévues sur les balais d'essuie-glaces viennent se glisser.

Cependant, malgré le fait que les encoches ou les ergots du support permettent le maintien de la paire de balais d'essuie-glaces à plat lorsque les deux balais sont engagés en totalité, il faut mentionner que l'insertion de chaque balai d'essuie-glace dans le support n'est pas aisée et demande un temps certain du fait que des forces s'appliquant à ce type de balai d'essuie-glace tendent à le faire revenir dans sa position courbe initiale. Par ailleurs, il doit être noté que dans cette solution, on est confronté à un risque d'endommagement des lames d'essuyage de la paire de balais d'essuie-glaces, ce qui est tout à fait préjudiciable pour le client final.

Une autre solution est envisagée dans la demande de brevet français publiée sous le numéro FR 2 875 486. Dans ce document, le support de conditionnement n'est pas de forme longitudinale, mais est constitué d'une pluralité de dispositifs de maintien dans lesquels viennent s'insérer longitudinalement les deux balais d'essuie-glaces.

Même si l'insertion des balais apparaît éventuellement plus aisée, cette solution comporte également un risque d'endommagement des lames d'essuyage de la paire de balais d'essuie-glaces lors de leur positionnement dans le support.

L'invention concerne donc plus précisément un dispositif de maintien comportant des moyens de fixation par emboîtage élastique des éléments de structure respectifs des deux balais selon une position dans laquelle les lames d'essuyage des deux balais sont orientées vers l'intérieur du dispositif de maintien, les plans de symétrie longitudinale respectifs de ces lames restant sensiblement parallèles.

On entend par « plan de symétrie longitudinale » d'une lame d'essuyage de balai d'essuie-glace, le plan qui coupe longitudinalement cette lame en deux demi lames sensiblement symétriques.

Un tel dispositif est décrit dans la demande de brevet français publiée sous le numéro FR 2 900 133, notamment en référence aux figures 10 à 15 de ce document. Pour fixer un premier balai d'essuie-glace dans ce dispositif en forme de rail, on positionne ce premier balai en vis-à-vis d'un premier canal ouvert du dispositif, sa lame d'essuyage étant dirigée vers l'intérieur de ce canal. On applique alors une pression dans une direction normale à un plan médian du rail, vers le fond du premier canal, pour une fixation du balai par emboîtage élastique de son élément de structure dans des moyens de fixation disposés par paires à différents endroits du premier canal. On procède de manière analogue pour fixer un second balai d'essuie-glace dans un second canal du dispositif de maintien.

Le risque d'endommager les lames d'essuyage des balais est réduit du fait que la fixation ne nécessite pas d'insertion longitudinale des balais. En revanche, l'ensemble constitué du dispositif de maintien et de la paire de balais d'essuie-glaces montés sur ce dispositif présente un certain encombrement.

L'invention se propose donc de trouver une solution de conditionnement applicable aux balais d'essuie-glaces de type flat-blade mais également à d'autres types de paires de balais d'essuie-glaces, présentant non seulement les avantages d'un dispositif de maintien utilisant un système de fixation par emboîtage élastique mais aussi un faible encombrement.

L'invention a pour objet un dispositif de maintien d'une paire de balais d'essuie-glaces selon la revendication 1.

Ainsi, avec une telle conformation du dispositif de maintien, dans laquelle les deux balais ne sont plus nécessairement entièrement positionnés de part et d'autre du plan médian du dispositif de maintien, mais peuvent chacun atteindre ce plan, voire même le dépasser, moyennant un léger décalage latéral de leurs lames d'essuyage respectives, l'encombrement est réduit. En effet, l'éventuelle légère perte en largeur d'un emballage contenant l'ensemble monté constitué du dispositif de maintien et des deux balais est largement compensée par le gain en hauteur du fait du rapprochement des deux balais.

De façon optionnelle, un dispositif de maintien qui n'est fait pas partie de l'invention, comporter une section comprenant deux canaux en « V » inversés l'un part rapport à l'autre, ayant une paroi commune et à l'intérieur desquels sont destinées à être logées respectivement les deux lames d'essuyage de la paire de balais d'essuie-glaces en position emboîtée de celle-ci.

Un dispositif de maintien selon l'invention comporte une section comprenant deux canaux inversés l'un part rapport à l'autre, en forme générale de « U » dont la base est commune, la section de cette base étant en créneau s'étendant de part et d'autre dudit plan médian du dispositif de maintien, et à l'intérieur desquels sont destinées à être logées respectivement les deux lames d'essuyage de la paire de balais d'essuie-glaces en position emboîtée de celle-ci.

De façon optionnelle également, les moyens de fixation par emboîtage élastique des éléments de structure respectifs des deux balais sont disposés par paires aux extrémités ouvertes de chaque canal.

De façon optionnelle également, les moyens de fixation par emboîtage élastique des éléments de structure respectifs des deux balais sont associés à des moyens de déboîtage comportant une patte d'écartement des moyens de fixation.

Un dispositif de maintien selon l'invention peut être obtenu par extrusion ou par injection plastique.

De façon optionnelle également, un dispositif de maintien selon l'invention peut comporter un rail s'étendant sur une majeure partie de la longueur de la paire de balais d'essuie-glaces, le rail comportant plusieurs zones distinctes comprenant chacune leurs propres moyens de fixation de la paire de balais d'essuie-glaces par emboîtage élastique.

On entend par « longueur de la paire de balais d'essuie-glaces », la longueur sur laquelle les deux balais d'essuie-glaces sont côte à côte. En particulier, si un balai est plus petit que l'autre et qu'il ne dépasse pas au delà d'une extrémité ou de l'autre du grand balai, il s'agit de la longueur du petit balai. On entend par « majeure partie de la longueur », au moins la moitié de cette longueur.

L'invention a également pour objet un ensemble de maintien d'une paire de balais d'essuie-glaces comprenant :
- une paire de balais d'essuie-glaces comportant chacun un élément de structure et une lame d'essuyage dont une extrémité libre est destinée à être en contact avec une surface vitrée à essuyer, et
- une pluralité de dispositifs de maintien tels que définis précédemment, répartis sur la longueur de la paire de balais d'essuie-glaces.

De façon optionnelle, un ensemble de maintien selon l'invention peut comporter au moins trois dispositifs de maintien, deux étant proches des extrémités des balais de la paire et un étant proche d'une zone centrale dans laquelle sont disposés des connecteurs des balais à des bras d'entraînement d'essuie-glaces.

De façon optionnelle également, un ensemble de maintien selon l'invention peut comporter au moins quatre dispositifs de maintien, deux d'entre eux étant proches de la zone centrale et disposés de part et d'autre des connecteurs des balais aux bras d'entraînement d'essuie-glaces.

De façon optionnelle également, chaque dispositif de maintien de l'ensemble de maintien comporte en outre au moins une saillie de préhension d'un bras de guidage, pour assurer un alignement des dispositifs de maintien en situation de fixation de la paire de balais d'essuie-glaces.

L'invention a également pour objet un emballage pour une paire de balais d'essuie-glaces, comportant un dispositif de maintien ou un ensemble de maintien tel que défini précédemment.

Enfin, l'invention a également pour objet un procédé de montage d'une paire de balais d'essuie-glaces comportant chacun un élément de structure et une lame d'essuyage dont une extrémité libre est destinée à être en contact avec une surface vitrée à essuyer, dans un dispositif de maintien ou un ensemble de maintien tel que défini précédemment, caractérisé en ce qu'il comporte les étapes suivantes :
- fixer un premier des deux balais au dispositif ou à l'ensemble de maintien, par emboîtage élastique de son élément de structure selon une position dans laquelle sa lame d'essuyage est orientée vers l'intérieur du dispositif de maintien ou de chaque dispositif de l'ensemble de maintien,
- fixer le second des deux balais à l'ensemble constitué du premier balai et du dispositif ou de l'ensemble de maintien, par emboîtage élastique de son élément de structure selon une position dans laquelle sa lame d'essuyage est orientée vers l'intérieur du dispositif de maintien ou de chaque dispositif de l'ensemble de maintien, son plan de symétrie longitudinale restant sensiblement parallèle au plan de symétrie longitudinale de la lame d'essuyage du premier balai, tout en assurant, en position emboîtée de la paire de balais, un écartement des deux plans de symétrie longitudinale respectifs et une proximité des deux balais tels que l'extrémité de chaque lame d'essuyage atteigne ou dépasse un plan médian du dispositif ou de l'ensemble de maintien perpendiculaire aux deux plans de symétrie longitudinale.

L'invention sera mieux comprise à l'aide de la description qui va suivre, donnée uniquement à titre d'exemple et faite en se référant aux dessins annexés dans lesquels :
- la figure 1 représente de façon schématique et en perspective, un dispositif de maintien selon un premier mode de réalisation de l'invention et une paire de balais d'essuie-glaces en position de montage,
- la figure 2 représente une coupe selon l'axe A-A du dispositif de maintien de la figure 1 dans lequel est montée une paire de balais d'essuie-glaces,
- la figure 3 représente de façon schématique et en perspective, un ensemble de maintien selon un second mode de réalisation, qui ne fait pas partie de l'invention, et une paire de balais d'essuie-glaces en position de montage sur cet ensemble,
- la figure 4 est une représentation similaire à la figure 3 dans laquelle la paire de balais d'essuie-glaces est montée dans l'ensemble de maintien de la figure 3, et
- la figure 5 représente une coupe selon l'axe A-A d'une variante du dispositif de la figure 1, et
- la figure 6 présente une coupe selon l'axe A-A du dispositif de la figure 1 dans lequel est montée une paire de balais d'essuie-glaces de structure différente de ceux montés dans le dispositif de la figure 1.

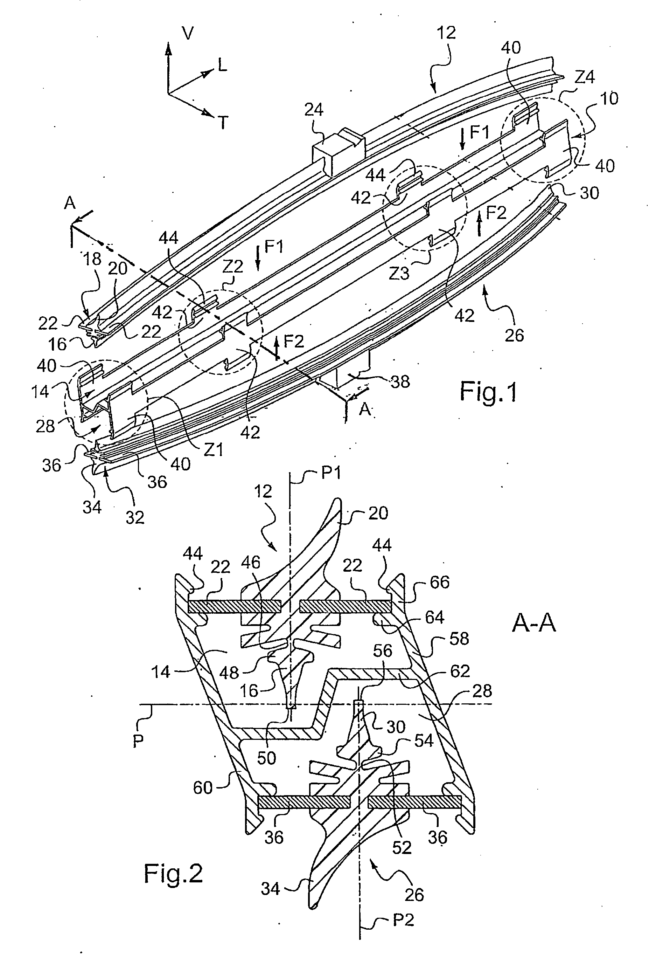

La figure 1 représente en perspective cavalière un dispositif de maintien selon un premier mode de réalisation de l'invention, désigné par la référence générale 10.

Dans la suite de la description, on adoptera à titre non limitatif des directions longitudinale, verticale et transversale indiquées sur cette figure par le trièdre (L, V, T) fixe par rapport au dispositif de maintien 10. La direction longitudinale L, ligne de fuite de la perspective cavalière, correspond à la direction principale du dispositif de maintien 10 qui est, dans ce premier exemple, réalisé sous la forme d'un rail. Tel que le dispositif de maintien 10 est illustré, la direction transversale T correspond à la direction horizontale de la figure 1. Par conséquent, la direction verticale V correspond à la direction verticale de la figure 1. On adoptera aussi l'orientation d'avant en arrière comme allant dans la direction longitudinale L de la gauche vers la droite en se reportant à la figure 1.

Le dispositif de maintien 10 est adapté pour recevoir une paire de balais d'essuie-glaces, par exemple de type flat blade. Il est avantageusement constitué d'une pièce rigide, par exemple en matière plastique, obtenue par exemple par extrusion ou injection plastique.

Un premier balai d'essuie-glace 12 prêt à être monté sur le dispositif de maintien 10 est représenté au dessus de celui-ci, à l'aplomb vertical d'un premier canal 14 aménagé à l'intérieur du dispositif de maintien et dont l'ouverture longitudinale est destinée à recevoir une lame d'essuyage 16 du premier balai 12. Ce premier balai 12 de type flat blade est de forme courbe, pour adhérer à une surface vitrée telle qu'un pare-brise de véhicule automobile, et s'étend longitudinalement dans la direction L.

Sa lame d'essuyage 16 est portée par un élément de structure 18 comprenant lui-même une monture de support 20 et deux vertèbres latérales 22 fixées à cette monture de support 20. La monture de support 20, par une forme aérodynamique particulière, peut remplir une fonction d'aileron (de l'anglais « spoiler ») visant à améliorer l'adhérence du balai 12 sur la surface vitrée. Elle comporte en outre deux encoches latérales s'étendant longitudinalement pour recevoir les deux vertèbres latérales 22. De façon alternative non illustrée dans cet exemple, la monture de support 20 peut être tubulaire et apte à recevoir une unique vertèbre intérieure.

Le premier balai d'essuie-glace 12 comporte aussi, disposé approximativement en son milieu, un connecteur 24 destiné à permettre sa connexion à un premier bras d'entraînement d'essuie-glace (non représenté) relié généralement à un moteur.

Un second balai d'essuie-glace 26 prêt à être monté sur le dispositif de maintien 10 est représenté en dessous de celui-ci, à l'aplomb vertical d'un second canal 28 aménagé à l'intérieur du dispositif de maintien et dont l'ouverture longitudinale, destinée à recevoir une lame d'essuyage 30 du second balai 26, est orientée dans un sens opposé à celle du premier canal 14.

Comme le premier balai 12, ce second balai 26 de type flat-blade est de forme courbe et s'étend longitudinalement dans la direction L. Sa lame d'essuyage 30 est portée par un élément de structure 32 comprenant lui-même une monture de support 34 et deux vertèbres latérales 36 fixées à cette monture de support 34. Le second balai d'essuie-glace 26 comporte aussi, disposé approximativement en son milieu, un connecteur 38 destiné à permettre sa connexion à un second bras d'entraînement d'essuie-glace (non représenté).

Dans la paire de balais d'essuie-glaces constituée des balais 12 et 26, l'un des deux est un balai d'essuie-glace pour le côté conducteur (CC), l'autre étant adapté pour le côté passager (CP). Les balais CP et CC ne sont pas nécessairement identiques. Notamment, ils ne sont pas nécessairement de même longueur : en général, le balai CC est plus long que le balai CP, la surface vitrée à nettoyer du côté du conducteur devant souvent être plus étendue que celle du côté du passager.

Ainsi, pour maintenir bien à plat la paire de balais dans le dispositif de maintien 10, il peut être avantageux, lorsque celui-ci est constitué d'une seule pièce en forme de rail comme cela est illustré sur la figure 1, que ce rail s'étende sur une majeure partie de la longueur de la paire de balais d'essuie-glaces, c'est-à-dire sur au moins la moitié de la longueur du plus petit balai, le balai CP.

Dans ce cas, le rail peut comporter plusieurs zones Z1, Z2, Z3 et Z4 comprenant chacune des moyens de positionnement ou des moyens de fixation pour assurer concrètement le maintien à plat des deux balais. Ces moyens de positionnement et de fixation sont par exemple disposés par paires sur les parois latérales des canaux 14 et 28 du côté de leurs ouvertures respectives destinées à recevoir les balais 12 et 26.

La zone Z1 est située à l'extrémité avant et la zone Z4 à l'extrémité arrière du dispositif de maintien 10. Dans le mode de réalisation de la figure 1, ces deux zones comportent les moyens de positionnement. Les zones Z2 et Z3 sont situées dans une région centrale du dispositif de maintien 10 destinée à recevoir les connecteurs 24, 38 des deux balais. Elles sont plus précisément situées de part et d'autre longitudinalement des connecteurs lorsque les balais sont montés dans le dispositif de maintien 10. Ces deux zones comportent les moyens de fixation.

Les moyens de positionnement, disposés aux extrémités avant Z1 et arrière Z2 du dispositif de maintien 10 et représentés par la référence générale 40, sont par exemple directement aménagés dans le dispositif de maintien 10 par extrusion ou injection plastique. Au moins localement, les parois latérales des canaux 14 et 28 s'étendent, d'une part, verticalement vers l'extérieur du dispositif de maintien 10 et, d'autre part, horizontalement vers l'intérieur du dispositif de maintien 10. Les extensions horizontales permettent de fournir une surface d'appui aux vertèbres latérales 22, 36 des premier et second balais de manière à bloquer verticalement les balais en limitant leur engagement à l'intérieur du dispositif de maintien 10. Les extensions verticales permettent d'encadrer latéralement les vertèbres latérales 22, 36 des premier et second balais de manière à bloquer latéralement les balais. Dans ce mode de réalisation, les moyens de positionnement 40 n'assurent pas la fixation des balais d'essuie-glaces à proprement parler mais contribuent à leur guidage et à leur bon positionnement dans le dispositif de maintien 10. Ils évitent en effet la torsion et le vrillage des balais en leur assurant un maintien stable.

Les moyens de fixation, disposés dans les zones Z2 et Z3 et représentés par la référence générale 42, sont par exemple eux aussi directement aménagés dans le dispositif de maintien 10 par extrusion ou injection plastique. Au moins localement, les parois latérales des canaux 14 et 28 s'étendent, d'une part, verticalement vers l'extérieur du dispositif de maintien 10 et, d'autre part, horizontalement vers l'intérieur du dispositif de maintien 10. Les extensions horizontales permettent de fournir une surface d'appui aux vertèbres latérales 22, 36 des premier et second balais. Les extensions verticales permettent d'encadrer latéralement les vertèbres latérales 22, 36 des premier et second balais de manière à bloquer latéralement les balais. En outre, les extensions verticales des moyens de fixation 42 comportent des clips 44 venus de matière avec le dispositif de maintien 10. La forme et le nombre des clips 44 varie au besoin ce qui permet d'obtenir une fixation efficace et stable de la paire de balais 12 et 26 car les moyens de fixation 42 agissent directement sur un élément de structure des balais, à savoir leurs vertèbres latérales.

Pour procéder au montage du premier balai d'essuie-glace 12 dans le dispositif de maintien 10, l'utilisateur exerce une pression dans le sens de la flèche F1 sur ce premier balai d'essuie-glace 12 en regard des moyens de positionnement 40 et de fixation 42 répartis sur le premier canal 14 du dispositif de maintien 10. L'utilisateur agit ainsi à l'encontre des moyens de fixation 42 par emboîtage élastique des vertèbres latérales du premier balai d'essuie-glace 12. Ce dernier est alors maintenu à plat par les clips 44, guidé au niveau des moyens de positionnement et libre à ses extrémités.

Pour procéder au montage du second balai d'essuie-glace 26 dans le dispositif de maintien 10, l'utilisateur exerce une pression dans le sens de la flèche F2 sur ce second balai d'essuie-glace 26 en regard des moyens de positionnement 40 et de fixation 42 répartis sur le second canal 28 du dispositif de maintien 10. L'utilisateur agit ainsi à l'encontre des moyens de fixation 42 par emboîtage élastique des vertèbres latérales du second balai d'essuie-glace 26. Ce dernier est alors maintenu à plat par les clips 44, guidé au niveau des moyens de positionnement et libre à ses extrémités.

La figure 2 illustre l'ensemble constitué du dispositif de maintien 10 et des deux balais 12, 26 montés sur celui-ci en coupe A-A, c'est-à-dire dans un plan orthogonal à la direction longitudinale L, au niveau des moyens de fixation 42 situés dans la zone Z3.

La lame d'essuyage 16, portée par l'élément de structure 18 du premier balai 12 est, dans cet exemple, venue de matière avec la monture de support 20 et reliée à celle-ci via un rétrécissement 46 sur toute la longueur de cette monture. Ce rétrécissement 46 permet à la lame d'essuyage 16 de pivoter par rapport à un axe longitudinal à chaque changement de sens lorsque le premier balai 12 est actionné par le bras de l'essuie-glace correspondant contre la surface vitrée. On notera aussi que, comme le montre la coupe A-A, La lame d'essuyage 16 comporte une première extrémité large 48 s'étendant longitudinalement au voisinage du rétrécissement 46 et une seconde extrémité 50, fine et libre, destinée à être en contact avec la surface vitrée à essuyer.

Au repos, la lame d'essuyage 16 présente un plan de symétrie longitudinale P1. En position montée sur le dispositif de maintien 10, lorsque les vertèbres latérales 22 du premier balai 12 sont maintenues entre les extensions horizontales, les extensions verticales et les clips disposés sur les parois latérales du premier canal 14, la lame d'essuyage 16 vient se loger complètement à l'intérieur du premier canal 14, son plan de symétrie longitudinale P1 étant maintenu sensiblement vertical, ou plus précisément sensiblement parallèle aux directions L, V.

La lame d'essuyage 30, portée par l'élément de structure 32 du second balai 26 est également venue de matière avec la monture de support 34 et reliée à celle-ci via un rétrécissement 52 sur toute la longueur de cette monture. Elle comporte aussi une première extrémité large 54 s'étendant longitudinalement au voisinage du rétrécissement 52 et une seconde extrémité 56, fine et libre, destinée à être en contact avec la surface vitrée à essuyer.

Au repos, la lame d'essuyage 30 présente un plan de symétrie longitudinale P2. En position montée sur le dispositif de maintien 10, lorsque les vertèbres latérales 36 du second balai 26 sont maintenues entre les extensions horizontales, les extensions verticales et les clips disposés sur les parois latérales du second canal 28, la lame d'essuyage 30 vient se loger complètement à l'intérieur du second canal 28, son plan de symétrie longitudinale P2 étant maintenu sensiblement vertical, ou plus précisément sensiblement parallèle aux directions L, V, c'est-à-dire sensiblement parallèle au plan P1.

L'illustration de la figure 2 met en évidence une section particulière du dispositif de maintien 10 selon une première variante de l'invention.

Conformément à cette première variante, le dispositif de maintien 10 présente une section dans laquelle deux parois externes parallèles 58, 60 s'étendent longitudinalement de part et d'autre d'un plan médian P du dispositif, ce plan médian étant horizontal, c'est-à-dire parallèle aux directions L, T. Ces deux parois externes 58 et 60 forment les parois externes des deux canaux 14 et 28. Elles sont reliées entre elles par une base 62, commune aux deux canaux 14 et 28, s'étendant longitudinalement au voisinage du plan médian P. Ainsi, les deux canaux 14 et 28 sont inversés l'un part rapport à l'autre et en forme générale de « U » dont la base 62 est commune.

Cependant, cette forme générale de « U » est déformée par le fait que les parois 58 et 60 sont inclinées par rapport à la verticale et que la section de la base 62 forme un créneau s'étendant de part et d'autre du plan médian P. L'inclinaison des paroi 58 et 60 provoque un décalage des plans de symétrie P1 et P2, tandis que la forme en créneau de la base 62 permet une extension des canaux 14 et 28 au delà du plan médian P. Ainsi :
- le premier canal 14, essentiellement situé au dessus du plan médian P, est légèrement décalé vers la gauche et comporte un espace intérieur s'étendant, dans sa partie gauche grâce à la forme en créneau de sa base 62, en dessous du plan médian P de manière à permettre à l'extrémité libre 50 de la lame d'essuyage 16 du premier balai 12 d'atteindre ce plan médian P, voire même de le dépasser, lorsque le premier balai 12 est fixé sur le dispositif de maintien 10, et
- de façon complémentaire, le second canal 28, essentiellement situé en dessous du plan médian P, est légèrement décalé vers la droite et comporte un espace intérieur s'étendant, dans sa partie droite grâce à la forme en créneau de sa base 62, au dessus du plan médian P de manière à permettre à l'extrémité libre 56 de la lame d'essuyage 30 du second balai 26 d'atteindre ce plan médian P, voire même de le dépasser, lorsque le second balai 26 est fixé sur le dispositif de maintien 10.

Les moyens de fixation 42 du dispositif de maintien 10 comportent, comme indiqué précédemment, des extensions horizontales 64 des parois latérales 58, 60 s'étendant vers l'intérieur du dispositif de maintien 10 et des extensions verticales 66 des parois latérales 58, 60 s'étendant vers l'extérieur du dispositif de maintien 10. Les extensions verticales 66 sont munies de clips 44 pour assurer, en coopération avec les extensions horizontales 64, la fonction de fixation par emboîtage élastique des vertèbres latérales 22, 36 des balais d'essuie-glaces.

Comme cela est visible sur la figure 2, les moyens de fixation sont ainsi disposés par paires aux extrémités ouvertes de chaque canal 14, 28 : une paire de fixation supérieure située au dessus du plan médian P pour le maintien du premier balai 12 et une paire de fixation inférieure située en dessous du plan médian P pour le maintien du second balai 26.

La position décalée des balais d'essuie-glace grâce à l'inclinaison des parois extérieures 58 et 60 comporte un premier avantage. Elle permet d'empêcher que les lames d'essuyage 16 et 30 ne se touchent en position montée des balais, même si ceux-ci devaient conserver une certaine courbure aux extrémités. Mais surtout, cette position décalée combinée à la forme précédemment décrite de la base 62 du dispositif de maintien 10 permet de réduire la distance entre les deux balais, par rapprochement des paires de fixation supérieure et inférieure, de sorte que les lames puissent se chevaucher partiellement latéralement sans se toucher, ou au moins atteindre chacune le plan médian P. Il en résulte un gain de place de l'ensemble constitué de la paire de balais d'essuie-glaces et du dispositif de maintien, soit un gain de place prise par un emballage comportant cet ensemble.

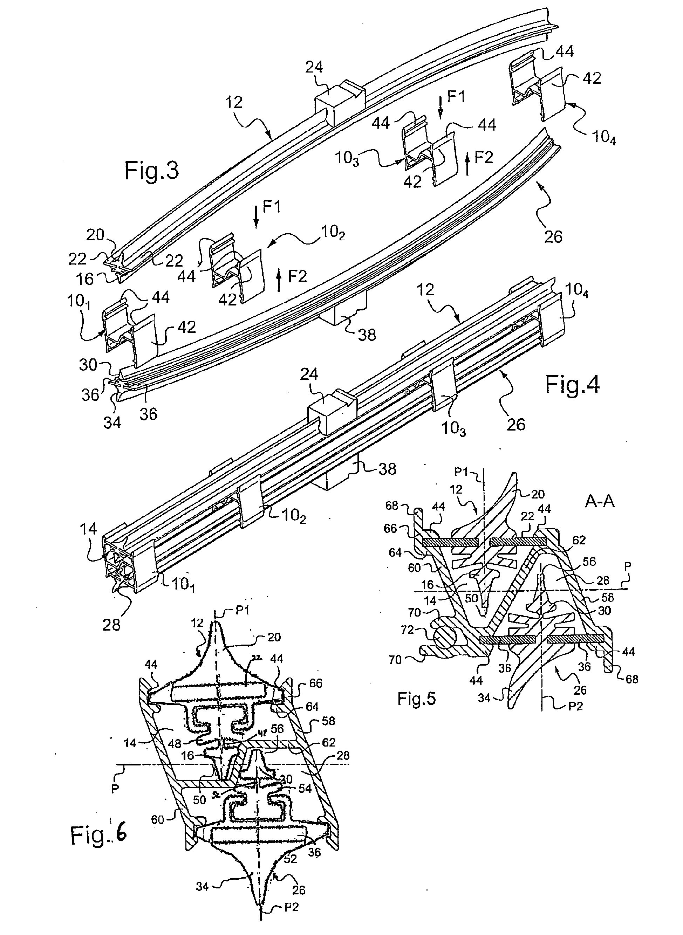

La figure 3 représente en perspective cavalière un ensemble de maintien comportant plusieurs dispositifs de maintien 10₁, 10₂, 10₃, 10₄, selon un second mode de réalisation de l'invention.

Conformément à ce second mode de réalisation, l'ensemble de maintien n'est pas conçu sous la forme d'un unique dispositif 10 en forme de rail comportant localement des moyens de fixation ou des moyens de positionnement, mais sous la forme de plusieurs dispositifs indépendants et pouvant être identiques. Ils sont tous munis de moyens de fixation tels que ceux décrits précédemment. Ils incluent notamment chacun deux paires de clips 44 pour une fixation par emboîtement élastique à chaque balai de la paire.

Leur fabrication est a priori plus simple que celle du dispositif de maintien 10 décrit en référence à la figure 1. Elle peut en effet provenir de la fabrication d'un rail de conception plus simple, à savoir de section telle que celle illustrée en figure 2 sur tout sa longueur, puis du découpage de ce rail en plusieurs portions, de même longueur (par exemple une trentaine de millimètres) ou de longueurs variables, chaque portion étant destinée à constituer l'un des dispositifs de maintien indépendants 10₁, 10₂, 10₃ ou 10₄. Ainsi ces dispositifs indépendants peuvent être obtenus par extrusion ou injection plastique pour obtenir une pièce intermédiaire de section constante, laquelle est ensuite sectionnée en autant d'éléments indépendants que nécessaire. On notera aussi que ce mode de réalisation nécessite moins de matière plastique pour la réalisation de l'ensemble de maintien, d'où une économie à la fabrication.

On notera enfin que cette caractéristique selon laquelle l'ensemble de maintien n'est pas conçu sous la forme d'un rail unique mais d'une pluralité de dispositifs indépendants est indépendante de l'invention telle que décrite précédemment dans son premier aspect et pourrait tout aussi bien s'appliquer avantageusement à des ensembles de maintien de l'état de la technique, tels que ceux envisagés dans le document FR 2 900 133, pour les modifier de manière à les rendre moins coûteux à fabriquer.

La figure 3 représente quatre dispositifs indépendants. Les dispositifs 10₁ et 10₄ sont disposés en regard des extrémités des balais d'essuie-glaces 12 et 26 alors que les dispositifs 10₂ et 10₃ sont disposés dans une région centrale proche des connecteurs 24 et 38 de ces balais, plus précisément de part et d'autre longitudinalement des connecteurs.

A priori, deux dispositifs de maintien sont nécessaires au minimum : par exemple les dispositifs 10₂ et 10₃ (de part et d'autre des connecteurs), ou bien les dispositifs 10₁ et 10₃ ou 10₂ et 10₄ (l'un à une extrémité, l'autre au voisinage des connecteurs du côté de l'autre extrémité), ou bien les dispositifs 10₁ et 10₄ (un à chaque extrémité). Pour assurer une meilleure mise à plat, trois dispositifs de maintien peuvent être utilisés : un à chaque extrémité et un au voisinage des connecteurs 24 et 38.

Pour procéder au montage du premier balai d'essuie-glace 12 dans l'ensemble de maintien, l'utilisateur dispose les dispositifs de maintien indépendants 10₁, 10₂, 10₃, 10₄ en regard des zones souhaitées sur le premier balai 12, puis exerce une pression dans le sens de la flèche F1 sur ce premier balai d'essuie-glace 12. L'utilisateur agit ainsi à l'encontre des moyens de fixation 42 par emboîtage élastique des vertèbres latérales du premier balai d'essuie-glace 12. Puis pour procéder au montage du second balai d'essuie-glace 26 dans l'ensemble de maintien, l'utilisateur exerce une pression dans le sens de la flèche F2 sur ce second balai d'essuie-glace 26 en regard des dispositifs de maintien indépendants 10₁, 10₂, 10₃, 10₄. L'utilisateur agit ainsi à l'encontre des moyens de fixation 42 par emboîtage élastique des vertèbres latérales du second balai d'essuie-glace 26.

Dans cette conformation emboîtée, illustrée sur la figure 4, les forces tendant à ramener les deux balais 12 et 26 à leur forme courbe d'origine s'opposent, ce qui assure finalement le maintien à plat de l'ensemble.

La figure 5 illustre une section particulière du dispositif de maintien 10 selon la coupe A-A, ou une section de chaque dispositif indépendant 10₁, 10₂, 10₃, 10₄ de l'ensemble de maintien, conformément à une seconde variante de l'invention, qui ne fait pas partie de l'invention.

Selon cette seconde variante, le dispositif de maintien 10, ou chaque dispositif 10₁, 10₂, 10₃, 10₄ de l'ensemble de maintien, présente une section dans laquelle les deux parois externes parallèles 58, 60 s'étendent longitudinalement de part et d'autre du plan médian P du dispositif. La base 62, formant paroi interne, est plane et relie les parois externes selon une diagonale de manière à former les deux canaux 14 et 28 en « V » inversés. Le premier canal 14 comporte donc deux parois en « V » dont l'une est la paroi externe 60 et l'autre la paroi interne 62, entre lesquelles vient se loger la lame d'essuyage 16 du premier balai 12. Le second canal 28 comporte deux parois en « V » dont l'une est la paroi externe 58 et l'autre la paroi interne 62, entre lesquelles vient se loger la lame d'essuyage 30 du second balai 26.

Ainsi, comme dans la variante précédente, la forme en « V » inversés permet un décalage des plans de symétrie P1 et P2 et une extension des canaux 14 et 28 de part et d'autre du plan médian P de sorte que :
- le premier canal 14, situé à gauche du second canal 28, dont les extrémités ouvertes munies de clips 44 sont située au dessus du plan médian P, comporte un espace intérieur s'étendant de part et d'autre du plan médian P de manière à permettre à la lame d'essuyage 16 du premier balai 12 de couper le plan médian à environ la moitié de sa hauteur, lorsque le premier balai 12 est fixé sur le dispositif de maintien 10 ou sur chaque dispositif 10₁, 10₂, 10₃, 10₄ de l'ensemble de maintien, et
- le second canal 28, situé à droite du premier canal 14, dont les extrémités ouvertes munies de clips 44 sont située en dessous du plan médian P, comporte un espace intérieur s'étendant de part et d'autre du plan médian P de manière à permettre à la lame d'essuyage 30 du second balai 26 de couper le plan médian à environ la moitié de sa hauteur, lorsque le second balai 26 est fixé sur le dispositif de maintien 10 ou sur chaque dispositif 10₁, 10₂, 10₃, 10₄ de l'ensemble de maintien.

Il en résulte que les lames d'essuyage se superposent latéralement sur quasiment toute leur hauteur lorsque les balais 12 et 26 sont fixés sur le dispositif ou l'ensemble de maintien, d'où un gain de place conséquent.

Comme dans la première variante, les moyens de fixation 42 comportent des extensions horizontales 64 situées aux extrémités ouvertes des parois des canaux 14 et 28 et prenant ici la forme de coudées aux extrémités ouvertes des parois latérales 58 et 60. Ils comportent en outre des extensions verticales 66 situées aux extrémités ouvertes des parois des canaux 14 et 28 et munies de clips 44 pour la fixation des vertèbres latérales 22, 36 de la paire de balais.

Enfin, ils peuvent être associés à des moyens de déboîtage comportant une patte 68 d'écartement des moyens de fixation, cette patte d'écartement pouvant elle-même prendre la forme d'une extension supplémentaire d'au moins une partie des extensions verticales 66.

De façon optionnelle, dans le second mode de réalisation où l'ensemble de maintien comporte une pluralité de dispositifs de maintien indépendants, chacun de ces dispositifs peut comporter des saillies 70 de préhension d'un bras linéaire de guidage 72, pour assurer l'alignement des dispositifs indépendants lors de la fixation du premier balai d'essuie-glace 12. Ce bras linéaire de guidage 72 est par exemple de forme cylindrique. Les saillies de préhension 70 sont par exemple en forme de pince venue de matière avec le dispositif de maintien 10₁, 10₂, 10₃ ou 10₄ et s'étendant à partir de l'une des faces externes de ses parois, pouvant se déformer légèrement et saisir ainsi le bras linéaire de guidage 72 par emboîtage élastique.

Il apparaît clairement qu'un dispositif et qu'un ensemble de maintien tels que décrits précédemment permettent de maintenir fixée et sensiblement à plat une paire de balais d'essuie-glaces devant être transportée et/ou mise en vente, avec un encombrement optimisé.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

Notamment, les modes de réalisation décrits précédemment sont particulièrement adaptés à des balais de type flat-blade dans lesquels des vertèbres latérales donnent aux balais une forme courbée. Dans ces modes de réalisation, les moyens de fixation sont adaptés pour maintenir les balais à l'aide de leurs vertèbres latérales. Mais lorsque les balais sont de type flat-blade à vertèbre unique intégrée dans la monture de support, ou lorsqu'ils ne sont pas de type flat-blade, les moyens de fixations peuvent être adaptés, notamment comme suggéré dans le document FR 2 900 133, pour maintenir les balais à l'aide d'un autre élément de structure tel que leur monture de support par exemple.

La figure 6 présente notamment une coupe selon l'axe A-A du dispositif de la figure 1 dans lequel est montée une paire de balais d'essuie-glaces de type flat-blade à vertèbre unique intégrée dans une monture de support. La structure de ces balais n'est pas décrite dans le détail car connue de l'art antérieur. Par ailleurs, le dispositif de maintien et le montage de ces balais est similaire à ce qui a été décrit dans le cadre des figures 1 et 2.

Comme on le voit, le dispositif selon l'invention est particulièrement avantageux car il est adapté au maintient de différentes catégories de balais d'essuie-glaces.

## Revendications

1. Dispositif (10; 10₁, 10₂, 10₃, 10₄) de maintien d'une paire de balais d'essuie-glaces (12, 26) comportant chacun un élément de structure (18, 32) et une lame d'essuyage (16, 30) dont une extrémité libre (50, 56) est destinée à être en contact avec une surface vitrée à essuyer, comportant des moyens (42) de fixation par emboîtage élastique des éléments de structure (18, 32) respectifs des deux balais (12, 26) selon une position dans laquelle les lames d'essuyage (16, 30) des deux balais sont orientées vers l'intérieur du dispositif de maintien, les plans de symétrie longitudinale (P1, P2) respectifs de ces lames restant sensiblement parallèles, ledit dispositif étant conformé pour assurer, en position emboîtée de la paire de balais (12, 26), un écartement des deux plans de symétrie longitudinale (P1, P2) respectifs et une proximité des deux balais (12, 26), ledit dispositif comportant une section comprenant deux canaux (14, 28) inversés l'un part rapport à l'autre, en forme générale de « U » dont la base (62) est commune à l'intérieur desquels sont destinées à être logées respectivement les deux lames d'essuyage (16, 30) de la paire de balais d'essuie-glaces (12, 26) en position emboîtée de celle-ci, **caractérisé en ce qu'**il est en outre conformé de façon à ce que l'extrémité libre (50, 56) de chaque lame d'essuyage atteigne ou dépasse un plan médian (P) du dispositif de maintien (10 ; 10₁, 10₂, 10₃, 10₄) perpendiculaire aux deux plans de symétrie longitudinale (P1, P2), et **en ce que** la section de ladite base (62) est en créneau s'étendant de part et d'autre dudit plan médian (P) du dispositif de maintien.

2. Dispositif de maintien (10 ; 10₁, 10₂, 10₃, 10₄) selon la revendication 1, dans lequel les moyens de fixation (42) par emboîtage élastique des éléments de structure (18, 32) respectifs des deux balais (12, 26) sont disposés par paires aux extrémités ouvertes de chaque canal (14, 28).

3. Dispositif de maintien (10 ; 10₁, 10₂, 10₃, 10₄) selon la revendication 1 ou 2, dans lequel les moyens de fixation (42) par emboîtage élastique des éléments de structure (18, 32) respectifs des deux balais (12, 26) sont associés à des moyens de déboîtage (68) comportant une patte d'écartement des moyens de fixation (42).

4. Dispositif de maintien (10 ; 10₁, 10₂, 10₃, 10₄) selon l'une quelconque des revendications 1 à 3, obtenu par extrusion ou par injection plastique.

5. Dispositif de maintien (10) selon l'une quelconque des revendications 1 à 4, comportant un rail s'étendant sur une majeure partie de la longueur de la paire de balais d'essuie-glaces (12, 26), le rail comportant plusieurs zones distinctes (Z2, Z3) comprenant chacune leurs propres moyens (42) de fixation de la paire de balais d'essuie-glaces (12, 26) par emboîtage élastique.

6. Ensemble de maintien d'une paire de balais d'essuie-glaces (12, 26) comprenant :
- une paire de balais d'essuie-glaces (12, 26) comportant chacun un élément de structure (18, 32) et une lame d'essuyage (16, 30) dont une extrémité libre (50, 56) est destinée à être en contact avec une surface vitrée à essuyer, et
- une pluralité de dispositifs de maintien (10₁, 10₂, 10₃, 10₄) selon l'une quelconque des revendications 1 à 4 répartis sur la longueur de la paire de balais d'essuie-glaces (12, 26).

7. Ensemble de maintien selon la revendication 6, comportant au moins trois dispositifs de maintien (10₁, 10₂, 10₃, 10₄), deux étant proches des extrémités (Z1, Z4) des balais (12, 26) de la paire et un étant proche d'une zone centrale (Z2, Z3) dans laquelle sont disposés des connecteurs (24, 38) des balais (12, 26) à des bras d'entraînement d'essuie-glaces.

8. Ensemble de maintien selon la revendication 7, comportant au moins quatre dispositifs de maintien (10₁, 10₂, 10₃, 10₄), deux d'entre eux étant proches de la zone centrale (Z2, Z3) et disposés de part et d'autre des connecteurs (24, 38) des balais (12, 26) aux bras d'entraînement d'essuie-glaces.

9. Ensemble de maintien selon l'une quelconque des revendications 6 à 8, dans lequel chaque dispositif de maintien (10₁, 10₂, 10₃, 10₄) comporte en outre au moins une saillie (70) de préhension d'un bras de guidage (72), pour assurer un alignement des dispositifs de maintien (10₁, 10₂, 10₃, 10₄) en situation de fixation de la paire de balais d'essuie-glaces (12, 26).

10. Emballage pour une paire de balais d'essuie-glaces (12, 26), comportant un dispositif de maintien ou un ensemble de maintien selon l'une quelconque des revendications 1 à 9.

11. Procédé de montage d'une paire de balais d'essuie-glaces (12, 26) comportant chacun un élément de structure (18, 32) et une lame d'essuyage (16, 30) dont une extrémité libre (50, 56) est destinée à être en contact avec une surface vitrée à essuyer, dans un dispositif de maintien ou un ensemble de maintien (10; 10₁, 10₂, 10₃, 10₄) selon l'une quelconque des revendications 1 à 9, **caractérisé en ce qu'**il comporte les étapes suivantes :
- fixer un premier (12) des deux balais (12, 26) au dispositif ou à l'ensemble de maintien, par emboîtage élastique de son élément de structure (18) selon une position dans laquelle sa lame d'essuyage (16) est orientée vers l'intérieur du dispositif de maintien ou de chaque dispositif de l'ensemble de maintien,
- fixer le second (26) des deux balais (12, 26) à l'ensemble constitué du premier balai et du dispositif ou de l'ensemble de maintien, par emboîtage élastique de son élément de structure (32) selon une position dans laquelle sa lame d'essuyage (30) est orientée vers l'intérieur du dispositif de maintien ou de chaque dispositif de l'ensemble de maintien, son plan de symétrie longitudinale (P2) restant sensiblement parallèle au plan de symétrie longitudinale (P1) de la lame d'essuyage (16) du premier balai (12), tout en assurant, en position emboîtée de la paire de balais, un écartement des deux plans de symétrie longitudinale (P1, P2) respectifs et une proximité des deux balais (12, 26) tels que l'extrémité libre (50, 56) de chaque lame d'essuyage (16, 30) atteigne ou dépasse le plan médian (P) du dispositif ou de l'ensemble de maintien perpendiculaire aux deux plans de symétrie longitudinale (P1, P2).

## Patentansprüche

1. Vorrichtung (10; 10₁, 10₂, 10₃, 10₄) zum Abstützen eines Scheibenwischerpaars (12, 26), umfassend jeweils ein Strukturelement (18, 32) und ein Wischerblatt (16, 30), dessen freies Ende (50, 56) dazu bestimmt ist, mit einer zu wischenden Glasfläche in Kontakt zu sein, umfassend Mittel (42) zur Befestigung der jeweiligen Strukturelemente (18, 32) der beiden Scheibenwischer (12, 26) durch elastisches Einstecken in einer Position, in der die Wischerblätter (16, 30) der beiden Scheibenwischer nach innen zur Abstützvorrichtung gerichtet sind, wobei die jeweiligen Längssymmetrieebenen (P1, P2) dieser Wischerblätter im Wesentlichen parallel bleiben, wobei die Vorrichtung derart ausgeführt ist, dass sie in der eingesteckten Position des Scheibenwischerpaars (12, 26) eine Beabstandung der beiden jeweiligen Längssymmetrieebenen (P1, P2) und eine Annäherung der beiden Scheibenwischer (12, 26) gewährleistet, wobei die Vorrichtung einen Abschnitt aufweist, umfassend zwei zueinander umgekehrte Kanäle (14, 28) in allgemeiner "U"-Form, deren Basis (62) gemeinsam ist und in denen jeweils die beiden Wischerblätter (16, 30) des Scheibenwischerpaars (12, 26) in der eingesteckten Position desselben angeordnet werden sollen, **dadurch gekennzeichnet, dass** sie ferner derart ausgeführt ist, dass das freie Ende (50, 56) jedes Wischerblattes eine Mittelebene (P) der Abstützvorrichtung (10; 10₁, 10₂, 10₃, 10₄) senkrecht auf die beiden Längssymmetrieebenen (P1, P2) erreicht oder überragt, und dass der Querschnitt der Basis (62) hohl ist und sich beiderseits der Mittelebene (P) der Abstützvorrichtung erstreckt.

2. Abstützvorrichtung (10; 10₁, 10₂, 10₃, 10₄) nach Anspruch 1, bei der die Mittel zur Befestigung (42) durch elastisches Einstecken der jeweiligen Strukturelemente (18, 32) der beiden Scheibenwischer (12, 26) paarweise an den offenen Enden jedes Kanals (14, 28) angeordnet sind.

3. Abstützvorrichtung (10; 10₁, 10₂, 10₃, 10₄) nach Anspruch 1 oder 2, bei der die Mittel zur Befestigung (42) durch elastisches Einstecken der jeweiligen Strukturelemente (18, 32) der beiden Scheibenwischer (12, 26) mit Mitteln zum Herausnehmen (68) verbunden sind, umfassend ein Stück zur Beabstandung der Befestigungsmittel (42) .

4. Abstützvorrichtung (10; 10₁, 10₂, 10₃, 10₄) nach einem der Ansprüche 1 bis 3, die durch Extrusion oder Kunststoffguss hergestellt wird.

5. Abstützvorrichtung (10) nach einem der Ansprüche 1 bis 4, umfassend eine Schiene, die sich auf einem Großteil der Länge des Scheibenwischerpaars (12, 26) erstreckt, wobei die Schiene mehrere getrennte Zonen (Z2, Z3) aufweist, umfassend jeweils ihre eigenen Mittel (42) zur Befestigung des Scheibenwischerpaars (12, 26) durch elastisches Einstecken.

6. Einheit zum Abstützen eines Scheibenwischerpaars (12, 26), umfassend:
- ein Scheibenwischerpaar (12, 26), jeweils umfassend ein Strukturelement (18, 32) und ein Wischerblatt (16, 30), dessen freies Ende (50, 56) dazu bestimmt ist, mit einer zu wischenden Glasfläche in Kontakt zu kommen, und
- eine Vielzahl von Abstützvorrichtungen (10₁, 10₂, 10₃, 10₄) nach einem der Ansprüche 1 bis 4, die auf der Länge des Scheibenwischerpaars (12, 26) verteilt sind.

7. Abstützeinheit nach Anspruch 6, umfassend mindestens drei Abstützvorrichtungen (10₁, 10₂, 10₃, 10₄), wobei zwei nahe zu den Enden (Z1, Z4) der Scheibenwischer (12, 26) des Wischerpaars sind und eine nahe einer Mittelzone (Z2, Z3) ist, in der Verbinder (24, 38) für die Scheibenwischer (12, 26) mit Scheibenwischerantriebsarmen angeordnet sind.

8. Abstützeinheit nach Anspruch 7, umfassend mindestens vier Abstützvorrichtungen (10₁, 10₂, 10₃, 10₄), wobei zwei von ihnen nahe der Mittelzone (Z2, Z3) und beiderseits der Verbinder (24, 38) der Scheibenwischer (12, 26) mit den Scheibenwischerantriebsarmen angeordnet sind.

9. Abstützeinheit nach einem der Ansprüche 6 bis 8, bei der jede Abstützvorrichtung (10₁, 10₂, 10₃, 10₄) ferner mindestens einen Vorsprung (70) zum Ergreifen eines Führungsarms (72) umfasst, um eine Ausrichtung der Abstützvorrichtungen (10₁, 10₂, 10₃, 10₄) in der Befestigungssituation des Scheibenwischerpaars (12, 26) zu gewährleisten.

10. Verpackung für ein Scheibenwischerpaar (12, 26), umfassend eine Abstützvorrichtung oder eine Abstützeinheit nach einem der Ansprüche 1 bis 9.

11. Verfahren zur Montage eines Scheibenwischerpaars (12, 26), jeweils umfassend ein Strukturelement (18, 32) und ein Wischerblatt (16, 30), dessen freies Ende (50, 56) dazu bestimmt ist, mit einer zu wischenden Glasfläche in Kontakt zu kommen, in einer Abstützvorrichtung oder einer Abstützeinheit (10; 10₁, 10₂, 10₃, 10₄) nach einem der Ansprüche 1 bis 9, **dadurch gekennzeichnet, dass** es die folgenden Schritte umfasst:
- Befestigen eines ersten (12) der beiden Scheibenwischer (12, 26) an der Abstützvorrichtung oder -einheit durch elastisches Einstecken seines Strukturelements (18) in einer Position, in der sein Wischerblatt (16) zum Inneren der Abstützvorrichtung oder jeder Vorrichtung der Abstützeinheit gerichtet ist,
- Befestigen des zweiten (26) der beiden Scheibenwischer (12, 26) an der Einheit, die von dem ersten Scheibenwischer und der Abstützvorrichtung oder -einheit gebildet ist, durch elastisches Einstecken seines Strukturelements (32) in einer Position, in der sein Wischerblatt (30) zum Inneren der Abstützvorrichtung oder jeder Vorrichtung der Abstützeinheit gerichtet ist, wobei seine Längssymmetrieebene (P2) im Wesentlichen parallel zur Längssymmetrieebene (P1) des Wischerblattes (16) des ersten Scheibenwischers (12) bleibt, wobei in der eingesteckten Position des Scheibenwischerpaars eine Beabstandung der beiden jeweiligen Längssymmetrieebenen (P1, P2) und eine Annäherung der beiden Scheibenwischer (12, 26) gewährleistet wird, so dass das freie Ende (50, 56) jedes Wischerblattes (16, 30) die Mittelebene (P) der Abstützvorrichtung oder -einheit senkrecht auf die beiden Längssymmetrieebenen (P1, P2) erreicht oder überragt.

## Claims

1. Device (10; 10₁, 10₂, 10₃, 10₄) for supporting a pair of windscreen wipers (12, 26) each comprising a structural element (18, 32) and a wiping blade (16, 30), of which a free end (50, 56) is intended to be in contact with a glazed surface to be wiped, comprising fastening means (42) based on elastic fitting of the respective structural elements (18, 32) of the two wipers (12, 26) in a position in which the wiping blades (16, 30) of the two wipers are oriented towards the interior of the supporting device, the respective planes of longitudinal symmetry (P1, P2) of these blades remaining substantially parallel, said device being configured to ensure, in the fitted position of the pair of wipers (12, 26), a separation of the two respective planes of longitudinal symmetry (P1, P2) and a proximity of the two wipers (12, 26), said device comprising a section comprising two channels (14, 28) that are reversed relative to one another, generally "U"-shaped, the base (62) of which is common, inside which the two wiping blades (16, 30) of the pair of windscreen wipers (12, 26) are respectively intended to be housed in the fitted position thereof, **characterized in that** it is also configured in such a way that the free end (50, 56) of each wiping blade reaches or extends beyond a median plane (P) of the supporting device (10; 10₁, 10₂, 10₃, 10₄) at right angles to the two planes of longitudinal symmetry (P1, P2), **and in that** the section of said base (62) is in the form of a slot extending on either side of said median plane (P) of the supporting device.

2. Supporting device (10; 10₁, 10₂, 10₃, 10₄) according to Claim 1, in which the fastening means (42) based on elastic fitting of the respective structural elements (18, 32) of the two wipers (12, 26) are arranged in pairs at the open ends of each channel (14, 28).

3. Supporting device (10; 10₁, 10₂, 10₃, 10₄) according to Claim 1 or 2, in which the fastening means (42) based on elastic fitting of the respective structural elements (18, 32) of the two wipers (12, 26) are associated with release means (68) comprising a tab for separating the fastening means (42).

4. Supporting device (10; 10₁, 10₂, 10₃, 10₄) according to any one of Claims 1 to 3, obtained by extrusion or by plastic injection.

5. Supporting device (10) according to any one of Claims 1 to 4, comprising a rail extending over most of the length of the pair of windscreen wipers (12, 26), the rail comprising a plurality of distinct zones (Z2, Z3) each comprising their own means (42) for fastening the pair of windscreen wipers (12, 26) by elastic fitting.

6. Supporting assembly for a pair of windscreen wipers (12, 26) comprising:
- a pair of windscreen wipers (12, 26) each comprising a structural element (18, 32) and a wiping blade (16, 30), a free end (50, 56) of which is intended to be in contact with a glazed surface to be wiped, and
- a plurality of supporting devices (10₁, 10₂, 10₃, 10₄) according to any one of Claims 1 to 4 distributed over the length of the pair of windscreen wipers (12, 26).

7. Supporting assembly according to Claim 6, comprising at least three supporting devices (10₁, 10₂, 10₃, 10₄), two being close to the ends (Z1, Z4) of the wipers (12, 26) of the pair and one being close to a central zone (Z2, Z3) in which are arranged connectors (24, 38) for connecting the wipers (12, 26) to windscreen wiper driving arms.

8. Supporting assembly according to Claim 7, comprising at least four supporting devices (10₁, 10₂, 10₃, 10₄), two of them being close to the central zone (Z2, Z3) and arranged on either side of the connectors (24, 38) connecting the wipers (12, 26) to the windscreen wiper driving arms.

9. Supporting assembly according to any one of Claims 6 to 8, in which each supporting device (10₁, 10₂, 10₃, 10₄) also comprises at least one protrusion (70) for gripping a guiding arm (72), to ensure an alignment of the supporting devices (10₁, 10₂, 10₃, 10₄) in a situation of fixing the pair of windscreen wipers (12, 26).

10. Packaging for a pair of windscreen wipers (12, 26), comprising a supporting device or a supporting assembly according to any one of Claims 1 to 9.

11. Method for mounting a pair of windscreen wipers (12, 26), each comprising a structural element (18, 32) and a wiping blade (16, 30), a free end (50, 56) of which is intended to be in contact with a glazed surface to be wiped, in a supporting device or a supporting assembly (10; 10₁, 10₂, 10₃, 10₄) according to any one of Claims 1 to 9, **characterized in that** it comprises the following steps:
- fixing a first (12) of the two wipers (12, 26) to the device or to the supporting assembly, by elastic fitting of its structural element (18) in a position in which its wiping blade (16) is oriented towards the interior of the supporting device or of each device of the supporting assembly,
- fixing the second (26) of the two wipers (12, 26) to the assembly consisting of the first wiper and of the supporting device or assembly, by elastic fitting of its structural element (32) in a position in which its wiping blade (30) is oriented towards the interior of the supporting device or of each device of the supporting assembly, its plane of longitudinal symmetry (P2) remaining substantially parallel to the plane of longitudinal symmetry (P1) of the wiping blade (16) of the first wiper (12), while ensuring, in the fitted position of the pair of wipers, a separation of the two respective planes of longitudinal symmetry (P1, P2) and a proximity of the two wipers (12, 26) such that the free end (50, 56) of each wiping blade (16, 30) reaches or extends beyond the median plane (P) of the supporting device or assembly at right angles to the two planes of longitudinal symmetry (P1, P2).
